# EUROPÄISCHE PATENTSCHRIFT

(11) **EP 3 357 043 B1**
(45) Veröffentlichungstag und Bekanntmachung des Hinweises auf die Patenterteilung: **24.04.2019**
(21) Anmeldenummer: 16779024.5
(22) Anmeldetag: 27.09.2016
(51) Int. Cl.: G07D 7/12, B42D 25/29, B42D 25/328

(54) **DOKUMENT UND VERFAHREN ZUM VERIFIZIEREN EINES DOKUMENTS**
DOCUMENT AND PROCESS FOR VERIFYING A DOCUMENT
DOCUMENT ET PROCÉDÉ POUR VERIFIER L'AUTENTICITÉ D'UN DOCUMENT

(30) Priorität: 01.10.2015 DE 102015116708
(43) Veröffentlichungstag der Anmeldung: 08.08.2018
(73) Patentinhaber: Bundesdruckerei GmbH, 10969 Berlin (DE)
(72) Erfinder: HARTL, Andreas, 8010 Graz (AT); DRESSEL, Olaf, 14641 Wustermark (DE); SCHMALSTIEG, Dieter, 8045 Graz (AT); KULIKOVSKA, Olga, 14165 Berlin (DE)
(74) Vertreter: Patentship Patentanwaltsgesellschaft mbH
(86) Internationale Anmeldenummer: PCT/EP2016/072989
(87) Internationale Veröffentlichungsnummer: WO 2017/055277

(56) Entgegenhaltungen:
- WO-A1-2015/011494
- WO-A1-2015/044051

## Beschreibung

Die vorliegende Erfindung betrifft ein Dokument mit blickwinkelabhängigen Sicherheitsmerkmalen, insbesondere Hologrammen, sowie ein Verfahren zum Verifizieren eines solchen Dokuments mit einem Telekommunikationsgerät.

Blickwinkelabhängige Sicherheitsmerkmale, beispielsweise Hologramme, werden für eine Vielzahl von Anwendungen eingesetzt, um eine Prüfung einer Echtheit oder Authentizität von Dokumenten zu ermöglichen. Beispielsweise werden blickwinkelabhängige Sicherheitsmerkmale auf Identifikationsdokumenten oder Banknoten aufgebracht, um ein Kopieren der Dokumente zu erschweren. Blickwinkelabhängige Sicherheitsmerkmale können dabei blickwinkelabhängige Darstellungen aufweisen.

Eine Verifikation eines blickwinkelabhängigen Sicherheitsmerkmals zur Prüfung der Echtheit oder Authentizität eines Dokumentes kann manuell durch eine Person durchgeführt werden. Die Detektion des blickwinkelabhängigen Sicherheitsmerkmals des Dokumentes erfolgt dabei visuell durch die Person. Anschließend kann das blickwinkelabhängige Sicherheitsmerkmal visuell durch die Person verifiziert werden, beispielsweise durch einen visuellen Vergleich der Darstellungen des blickwinkelabhängigen Sicherheitsmerkmals mit vorbekannten Referenzdarstellungen. Eine Detektion und Verifikation eines blickwinkelabhängigen Sicherheitsmerkmals durch eine Person ist üblicherweise sehr zeitintensiv.

Zur Verifikation von Dokumenten mit blickwinkelabhängigen Sicherheitsmerkmalen ist daher ein Einsatz elektronischer Assistenzsysteme von besonderem Interesse. Hierfür ist es wünschenswert, eine Detektion von blickwinkelabhängigen Sicherheitsmerkmalen von Dokumente unter Verwendung technischer Hilfsmittel zumindest teilweise automatisiert durchzuführen.

Aus der WO 2015/011494 A1 ist ein Dokument mit zwei benachbarten Sicherheitsmerkmalen bekannt, wobei nur eines der beiden Sicherheitsmerkmale bei Änderung der Blickposition blickwinkelabhängig ist.

Aus der WO 2015/044051 A1 ist ein Telekommunikationsgerät zum Verifizieren eines einzelnen Sicherheitsmerkmals eines Dokuments bekannt, dessen Prozessor zum Vergleichen der Darstellung des einen Sicherheitsmerkmals mit einer Referenzdarstellung ausgelegt ist.

Es ist daher die Aufgabe der vorliegenden Erfindung, ein benutzerfreundliches Konzept zum Verifizieren eines Dokuments unter Verwendung technischer Hilfsmittel zu schaffen. Diese Aufgabe wird durch die Merkmale der unabhängigen Ansprüche gelöst. Vorteilhafte Ausbildungsformen sind Gegenstand der abhängigen Patentansprüche, der Beschreibung sowie der Figuren.

Die Erfindung basiert auf der Erkenntnis, dass die obige Aufgabe durch ein Dokument mit einem ersten blickwinkelabhängigen Sicherheitsmerkmal und einem zweiten blickwinkelabhängigen Sicherheitsmerkmal gelöst werden kann, wobei das erste blickwinkelabhängige Sicherheitsmerkmal ausgebildet ist, aus einer ersten Blickposition in einer vorbestimmten Höhe oberhalb des zweiten blickwinkelabhängigen Sicherheitsmerkmals eine erste blickwinkelabhängige Darstellung bereitzustellen, und das zweite blickwinkelabhängige Sicherheitsmerkmal ausgebildet ist, aus einer zweiten Blickposition in der vorbestimmten Höhe oberhalb des ersten blickwinkelabhängigen Sicherheitsmerkmals eine zweite blickwinkelabhängige Darstellung bereitzustellen.

Gemäß einem ersten Aspekt betrifft die Erfindung ein Dokument mit einem Kartenkörper, einem auf dem Kartenkörper angeordneten ersten blickwinkelabhängigen Sicherheitsmerkmal und einem auf dem Kartenkörper benachbart zu dem ersten blickwinkelabhängigen Sicherheitsmerkmal angeordneten zweiten blickwinkelabhängigen Sicherheitsmerkmal. Dabei ist das erste blickwinkelabhängige Sicherheitsmerkmal ausgebildet, aus einer ersten Blickposition in einer vorbestimmten Höhe oberhalb des zweiten blickwinkelabhängigen Sicherheitsmerkmals eine erste blickwinkelabhängige Darstellung bereitzustellen, und das zweite blickwinkelabhängige Sicherheitsmerkmal ausgebildet, aus einer zweiten Blickposition in der vorbestimmten Höhe oberhalb des ersten blickwinkelabhängigen Sicherheitsmerkmals eine zweite blickwinkelabhängige Darstellung bereitzustellen. Dadurch wird beispielsweise der Vorteil erreicht, dass das Dokument benutzerfreundlich mittels einer Telekommunikationsvorrichtung mit einer Bildkamera, insbesondere einem Smartphone, verifiziert werden kann.

Das Dokument kann eines der folgenden Dokumente sein: ein Identitätsdokument, wie beispielsweise ein Personalausweis, ein Reisepass, ein Zugangskontrollausweis, ein Berechtigungsausweis, ein Unternehmensausweis, ein Steuerzeichen, ein Ticket, eine Geburtsurkunde, ein Führerschein, ein Kraftfahrzeugausweis, oder ein Zahlungsmittel, beispielsweise eine Bankkarte oder eine Kreditkarte. Das Dokument kann ferner einen elektronisch auslesbaren Schaltkreis, beispielsweise einen RFID-Chip umfassen. Das Dokument kann ein- oder mehrlagig sowie papier- und/oder kunststoffbasiert sein. Das Dokument kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen.

Gemäß einer Ausführungsform sind die erste blickwinkelabhängige Darstellung und die zweite blickwinkelabhängige Darstellung gleich. Dadurch wird beispielsweise der Vorteil erreicht, dass lediglich eine Referenzdarstellung für die Verifizierung des Dokuments benötigt wird.

Gemäß einer Ausführungsform sind das erste blickwinkelabhängige Sicherheitsmerkmal und das zweite blickwinkelabhängige Sicherheitsmerkmal ausgebildet, die blickwinkelabhängigen Darstellungen aus demselben Blickwinkel bereitzustellen. Dadurch wird beispielsweise der technische Vorteil erreicht, dass das Dokument benutzerfreundlich verifiziert werden kann, indem eine Telekommunikationsvorrichtung mit einer Bildkamera lediglich parallel relativ zu dem Dokument bewegt werden muss.

Gemäß einer Ausführungsform ist das erste blickwinkelabhängige Sicherheitsmerkmal ausgebildet, die erste blickwinkelabhängige Darstellung bei einer Beleuchtung, insbesondere bei einer Blitzbeleuchtung, des ersten blickwinkelabhängigen Sicherheitsmerkmals aus der vorbestimmten Höhe oberhalb des zweiten blickwinkelabhängigen Sicherheitsmerkmals bereitzustellen, und das zweite blickwinkelabhängige Sicherheitsmerkmal ausgebildet, die zweite blickwinkelabhängige Darstellung bei einer Beleuchtung, insbesondere bei einer Blitzbeleuchtung, des zweiten blickwinkelabhängigen Sicherheitsmerkmals aus der vorbestimmten Höhe oberhalb des ersten blickwinkelabhängigen Sicherheitsmerkmals bereitzustellen. Dadurch wird beispielsweise der Vorteil erreicht, dass auf der Grundlage der Beleuchtung die Bildaufnahmebedingungen zum Verifizieren des Dokuments effizient bestimmt werden können.

Gemäß einer Ausführungsform umfasst das Dokument ferner ein drittes blickwinkelabhängiges Sicherheitsmerkmal, das auf dem Kartenkörper benachbart zu dem ersten blickwinkelabhängigen Sicherheitsmerkmal und dem zweiten blickwinkelabhängigen Sicherheitsmerkmal angeordnet ist, wobei das dritte blickwinkelabhängige Sicherheitsmerkmal ausgebildet ist, aus der ersten Blickposition in der vorbestimmten Höhe oberhalb des zweiten blickwinkelabhängigen Sicherheitsmerkmals eine dritte blickwinkelabhängige Darstellung bereitzustellen, und aus der zweiten Blickposition in der vorbestimmten Höhe oberhalb des ersten blickwinkelabhängigen Sicherheitsmerkmals eine vierte blickwinkelabhängige Darstellung bereitzustellen. Dadurch wird beispielsweise der Vorteil erreicht, dass durch das dritte blickwinkelabhängige Sicherheitsmerkmal die Fälschungssicherheit des Dokuments noch mehr erhöht wird.

Gemäß einer Ausführungsform umfasst das Dokument ferner ein auslesbares Identifikationselement zur eindeutigen Identifizierung des Dokuments. Dadurch wird beispielsweise der Vorteil erreicht, dass Referenzdarstellungen nicht lokal vorgehalten werden müssen, sondern mittels des Identifikationselements eine Referenzdarstellung von einem entfernten Datenbankserver angefragt werden kann.

Gemäß einer Ausführungsform kann es sich bei dem ersten blickwinkelabhängigen Sicherheitsmerkmal oder dem zweiten blickwinkelabhängigen Sicherheitsmerkmal um ein Hologramm oder eine Drucktinte mit blickwinkelabhängigen Reflexionseigenschaften oder Absorptionseigenschaften handeln.

Gemäß einem zweiten Aspekt betrifft die Erfindung ein Verfahren zum Verifizieren eines Dokumentes, das einen Kartenkörper, ein auf dem Kartenkörper angeordnetes erstes blickwinkelabhängiges Sicherheitsmerkmal und ein auf dem Kartenkörper benachbart zu dem ersten blickwinkelabhängigen Sicherheitsmerkmal angeordnetes zweites blickwinkelabhängiges Sicherheitsmerkmal aufweist, mittels eines Telekommunikationsgerätes, insbesondere eines Smartphones, das eine Bildkamera aufweist. Dabei umfasst das Verfahren die folgenden Schritte. Das Aufnehmen einer ersten blickwinkelabhängigen Darstellung des ersten blickwinkelabhängigen Sicherheitsmerkmals aus einer ersten Blickposition in einer vorbestimmten Höhe oberhalb des zweiten blickwinkelabhängigen Sicherheitsmerkmals durch die Bildkamera. Das Aufnehmen einer zweiten blickwinkelabhängigen Darstellung des zweiten blickwinkelabhängigen Sicherheitsmerkmals aus einer zweiten Blickposition in der vorbestimmten Höhe oberhalb des ersten blickwinkelabhängigen Sicherheitsmerkmals durch die Bildkamera. Das Vergleichen der aufgenommenen ersten blickwinkelabhängigen Darstellung und der aufgenommenen zweiten blickwinkelabhängigen Darstellung mit zumindest einer Referenzdarstellung, um das Dokument zu verifizieren.

Gemäß einer Ausführungsform werden die erste aufgenommene blickwinkelabhängige Darstellung und die zweite aufgenommene blickwinkelabhängige Darstellung mit derselben Referenzdarstellung oder mit unterschiedlichen Referenzdarstellungen verglichen.

Gemäß einer Ausführungsform wird die Bildkamera des Telekommunikationsgeräts durch eine Bewegung aus der ersten Blickposition in die zweite Blickposition bewegt, indem das Telekommunikationsgerät parallel zum Kartenkörper des Dokuments bewegt wird.

Gemäß einer Ausführungsform umfasst der Schritt des Aufnehmens der ersten blickwinkelabhängigen Darstellung des ersten blickwinkelabhängigen Sicherheitsmerkmals ferner den Schritt des Aufnehmens einer dritten blickwinkelabhängigen Darstellung eines dritten blickwinkelabhängigen Sicherheitsmerkmals, das auf dem Kartenkörper benachbart zu dem ersten blickwinkelabhängigen Sicherheitsmerkmal und dem zweiten blickwinkelabhängigen Sicherheitsmerkmal angeordnet ist, aus der ersten Blickposition in der vorbestimmten Höhe oberhalb des zweiten blickwinkelabhängigen Sicherheitsmerkmals durch die Bildkamera, und der Schritt des Aufnehmens der zweiten blickwinkelabhängigen Darstellung des zweiten blickwinkelabhängigen Sicherheitsmerkmals ferner den Schritt des Aufnehmens einer vierten blickwinkelabhängigen Darstellung des dritten blickwinkelabhängigen Sicherheitsmerkmals aus der zweiten Blickposition in der vorbestimmten Höhe oberhalb des ersten blickwinkelabhängigen Sicherheitsmerkmals durch die Bildkamera.

Gemäß einer Ausführungsform umfasst das Verfahren ferner den Schritt des Anzeigens von Hinweisen zur Positionierung der Bildkamera in der ersten Blickposition oder der zweiten Blickposition auf einer Anzeige des Telekommunikationsgerätes.

Gemäß einer Ausführungsform umfasst der Schritt des Aufnehmens der ersten blickwinkelabhängigen Darstellung des ersten blickwinkelabhängigen Sicherheitsmerkmals aus der ersten Blickposition in der vorbestimmten Höhe oberhalb des zweiten blickwinkelabhängigen Sicherheitsmerkmals durch die Bildkamera ferner den Schritt des Beleuchtens, insbesondere des Blitzbeleuchtens, des ersten blickwinkelabhängigen Sicherheitsmerkmals aus der vorbestimmten Höhe oberhalb des zweiten blickwinkelabhängigen Sicherheitsmerkmals, oder der Schritt des Aufnehmens der zweiten blickwinkelabhängigen Darstellung des zweiten blickwinkelabhängigen Sicherheitsmerkmals aus der zweiten Blickposition in der vorbestimmten Höhe oberhalb des ersten blickwinkelabhängigen Sicherheitsmerkmals durch die Bildkamera umfasst ferner den Schritt des Beleuchtens, insbesondere des Blitzbeleuchtens, des zweiten blickwinkelabhängigen Sicherheitsmerkmals aus der vorbestimmten Höhe oberhalb des ersten blickwinkelabhängigen Sicherheitsmerkmals.

Gemäß einer Ausführungsform umfasst das Verfahren ferner den Schritt des Auslesens eines Identifikationselements des Dokuments durch das Telekommunikationsgerät und den Schritt des Herunterladens der Referenzdarstellung oder der Referenzdarstellungen von einem entfernten Server auf das Telekommunikationsgerät auf der Grundlage des Identifikationselements.

Gemäß einem dritten Aspekt betrifft die Erfindung ein Telekommunikationsgerät, insbesondere ein Smartphone, zum Verifizieren eines Dokuments, das einen Kartenkörper, ein auf dem Kartenkörper angeordnetes erstes blickwinkelabhängiges Sicherheitsmerkmal und ein auf dem Kartenkörper benachbart zu dem ersten blickwinkelabhängigen Sicherheitsmerkmal angeordnetes zweites blickwinkelabhängiges Sicherheitsmerkmal aufweist. Das Telekommunikationsgerät umfasst eine Bildkamera, die ausgebildet ist, eine erste blickwinkelabhängige Darstellung des ersten blickwinkelabhängigen Sicherheitsmerkmals aus einer ersten Blickposition in einer vorbestimmten Höhe oberhalb des zweiten blickwinkelabhängigen Sicherheitsmerkmals aufzunehmen und eine zweite blickwinkelabhängige Darstellung des zweiten blickwinkelabhängigen Sicherheitsmerkmals aus einer zweiten Blickposition in der vorbestimmten Höhe oberhalb des ersten blickwinkelabhängigen Sicherheitsmerkmals aufzunehmen, und einen Prozessor, der ausgebildet ist, die aufgenommene erste blickwinkelabhängige Darstellung und die aufgenommene zweite blickwinkelabhängige Darstellung mit zumindest einer Referenzdarstellung zu vergleichen, um das Dokument zu verifizieren.

Weitere Ausführungsbeispiele werden Bezug nehmend auf die beiliegenden Figuren näher erläutert. Es zeigen:
- Fig. 1: ein schematisches Diagramm eines Dokuments mit blickwinkelabhängigen Sicherheitsmerkmalen gemäß einer Ausführungsform und eines Telekommunikationsgeräts zum Verifizieren des Dokuments gemäß einer Ausführungsform;
- Fig. 2a-d: schematische Diagramme unterschiedlicher Ausführungsformen eines Dokuments mit blickwinkelabhängigen Sicherheitsmerkmalen;
- Fig. 3: ein schematisches Diagramm eines Verfahrens zum Verifizieren eines Dokuments gemäß einer Ausführungsform;
- Fig. 4: ein schematisches Diagramm eines Ablaufschemas bei der Verifizierung eines Dokuments gemäß einer Ausführungsform; und
- Fig. 5: ein schematisches Diagramm der auf einer Anzeige eines Telekommunikationsgeräts angezeigten Informationen gemäß einer Ausführungsform.

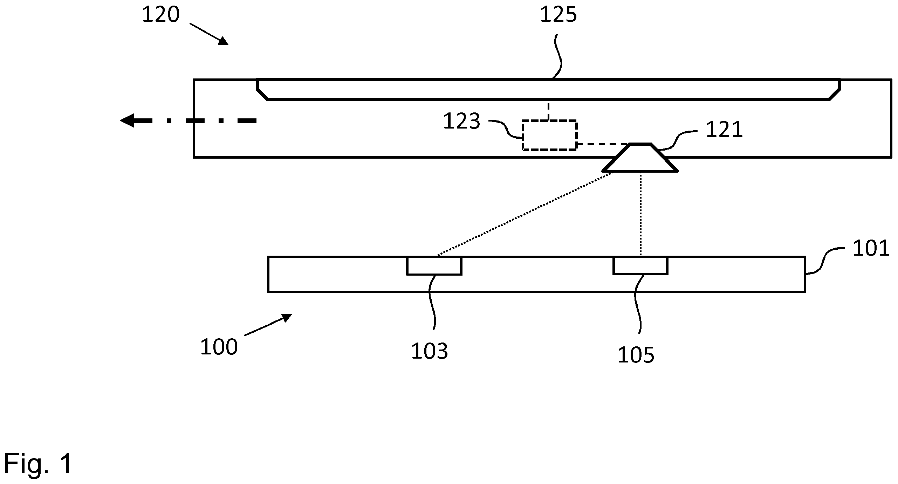

Figur 1 zeigt ein schematisches Diagramm in Form einer schematischen Seitenquerschnittsansicht eines Dokuments 100 und eines Telekommunikationsgerät 120, beispielsweise eines Smartphones, zum Verifizieren des Dokuments 100.

Das Dokument 100 umfasst einen Kartenkörper 101, ein auf dem Kartenkörper 101 angeordnetes erstes blickwinkelabhängiges Sicherheitsmerkmal 103 und ein auf dem Kartenkörper 101 benachbart zu dem ersten blickwinkelabhängigen Sicherheitsmerkmal 103 angeordnetes zweites blickwinkelabhängiges Sicherheitsmerkmal 105. Gemäß einer Ausführungsform kann es sich bei dem ersten blickwinkelabhängigen Sicherheitsmerkmal 103 oder bei dem zweiten blickwinkelabhängigen Sicherheitsmerkmal 105 um ein Hologramm oder eine Drucktinte mit blickwinkelabhängigen Reflexionseigenschaften oder Absorptionseigenschaften handeln.

Das erste blickwinkelabhängige Sicherheitsmerkmal 103 ist ausgebildet, aus einer ersten Blickposition in einer vorbestimmten Höhe oberhalb des zweiten blickwinkelabhängigen Sicherheitsmerkmals 105 eine erste blickwinkelabhängige Darstellung bereitzustellen.

Das zweite blickwinkelabhängige Sicherheitsmerkmal 105 ist ausgebildet, aus einer zweiten Blickposition in der vorbestimmten Höhe oberhalb des ersten blickwinkelabhängigen Sicherheitsmerkmals 103 eine zweite blickwinkelabhängige Darstellung bereitzustellen.

In Figur 1 ist die erste Blickposition durch eine Bildkamera 121 des Telekommunikationsgeräts 120 relativ zu dem Dokument 101 definiert. Wie sich dies Figur 1 entnehmen lässt, befindet sich in der ersten Blickposition die Bildkamera 121 senkrecht oberhalb des zweiten blickwinkelabhängigen Sicherheitsmerkmals 105 des Dokuments 101. Mit anderen Worten: in der ersten Blickposition trifft die optische Achse der Bildkamera 121 auf das zweite blickwinkelabhängige Sicherheitsmerkmal 105 in einem rechten Winkel zu der Oberseite des Kartenkörpers 101. Wie sich dies Figur 1 ferner entnehmen lässt, erfasst die Bildkamera 121 in der ersten Blickposition das erste blickwinkelabhängige Sicherheitsmerkmal 103 unter einem Winkel, der zum einen durch den Abstand der Bildkamera 121 vom Dokument 101, d.h. die Höhe der Bildkamera 121 oberhalb des Dokuments 101, und zum anderen durch den Abstand des ersten blickwinkelabhängigen Sicherheitsmerkmals 103 vom zweiten blickwinkelabhängigen Sicherheitsmerkmal 105 bestimmt wird.

Die zweite Blickposition kann beispielsweise dadurch erreicht werden, dass das Telekommunikationsgerät 120 in der durch den Pfeil markierten Richtung relativ zu dem Dokument 101 solange parallel verschoben wird, bis sich die Bildkamera 121 senkrecht oberhalb des ersten blickwinkelabhängigen Sicherheitsmerkmals 103 des Dokuments 101 befindet. In der zweiten Blickposition trifft die optische Achse der Bildkamera 121 auf das erste blickwinkelabhängige Sicherheitsmerkmal 103 in einem rechten Winkel zu der Oberseite des Kartenkörpers 101. Ferner erfasst die Bildkamera 121 in der zweiten Blickposition das zweite blickwinkelabhängige Sicherheitsmerkmal 105 unter einem Winkel, und zwar vorzugsweise unter dem Winkel, unter dem die Bildkamera 121 in der ersten Blickposition das erste blickwinkelabhängige Sicherheitsmerkmal 103 erfasst. Mit anderen Worten: gemäß einer Ausführungsform sind das erste blickwinkelabhängige Sicherheitsmerkmal 103 und das zweite blickwinkelabhängige Sicherheitsmerkmal 105 ausgebildet, die blickwinkelabhängigen Darstellungen unter demselben Blickwinkel bereitzustellen.

Gemäß einer Ausführungsform können die erste blickwinkelabhängige Darstellung und die zweite blickwinkelabhängige Darstellung gleich sein. In diesem Fall kann ein Vergleich mit lediglich einem Referenzbild durchgeführt werden.

Gemäß einer Ausführungsform ist das erste blickwinkelabhängige Sicherheitsmerkmal 103 ausgebildet, die erste blickwinkelabhängige Darstellung bei einer Beleuchtung, insbesondere bei einer Blitzbeleuchtung, des ersten blickwinkelabhängigen Sicherheitsmerkmals 103 aus der vorbestimmten Höhe oberhalb des zweiten blickwinkelabhängigen Sicherheitsmerkmals 105 bereitzustellen, und das zweite blickwinkelabhängige Sicherheitsmerkmal 105 ausgebildet, die zweite blickwinkelabhängige Darstellung bei einer Beleuchtung, insbesondere bei einer Blitzbeleuchtung, des zweiten blickwinkelabhängigen Sicherheitsmerkmals 105 aus der vorbestimmten Höhe oberhalb des ersten blickwinkelabhängigen Sicherheitsmerkmals 103 bereitzustellen.

Gemäß einer Ausführungsform können das erste blickwinkelabhängige Sicherheitsmerkmal 103 oder das zweite blickwinkelabhängige Sicherheitsmerkmal 105 ausgebildet sein, aus noch weiteren Blickpositionen in der vorbestimmten Höhe oberhalb des Kartenkörpers 101 weitere blickwinkelabhängige Darstellung bereitzustellen.

Das in Figur 1 dargestellte Telekommunikationsgerät 120 ist dazu ausgebildet, das ebenfalls in Figur 1 dargestellte Dokument 100 zu verifizieren. Das Telekommunikationsgerät 120, das insbesondere in Form eines Smartphones ausgebildet sein kann, umfasst die Bildkamera 121, die ausgebildet ist, eine erste blickwinkelabhängige Darstellung des ersten blickwinkelabhängigen Sicherheitsmerkmals 103 aus einer ersten Blickposition in einer vorbestimmten Höhe oberhalb des zweiten blickwinkelabhängigen Sicherheitsmerkmals 105 aufzunehmen und eine zweite blickwinkelabhängige Darstellung des zweiten blickwinkelabhängigen Sicherheitsmerkmals 105 aus einer zweiten Blickposition in der vorbestimmten Höhe oberhalb des ersten blickwinkelabhängigen Sicherheitsmerkmals 103 aufzunehmen. Das Telekommunikationsgerät 120 umfasst ferner einen Prozessor 123, der ausgebildet ist, die aufgenommene erste blickwinkelabhängige Darstellung und die aufgenommene zweite blickwinkelabhängige Darstellung mit zumindest einer Referenzdarstellung zu vergleichen, um das Dokument 100 zu verifizieren.

Wie in Figur 1 dargestellt, kann das Telekommunikationsgerät 120 ferner eine Anzeige 125 umfassen, beispielsweise zur Anzeige von Information zur korrekten Positionierung des Telekommunikationsgeräts 120 in der ersten Blickposition oder der zweiten Blickposition.

Ferner kann das Telekommunikationsgerät 120 eine Lichtquelle, insbesondere eine Blitzlichtquelle, umfassen, die in der unmittelbaren Nähe der Bildkamera 121 angeordnet sein kann, um das erste blickwinkelabhängige Sicherheitsmerkmal 103 und/oder das zweite blickwinkelabhängige Sicherheitsmerkmal 105 beim Aufnehmen der ersten und/oder der zweiten blickwinkelabhängigen Darstellung auszuleuchten. Dies erlaubt es, beispielsweise bei der senkrechten Ausrichtung der Bildkamera 121 und der Lichtquelle auf das erste blickwinkelabhängige Sicherheitsmerkmal 103 in der zweiten Blickposition die zweite blickwinkelabhängige Darstellung des zweiten blickwinkelabhängigen Sicherheitsmerkmals 105 aufzunehmen und mittels des vom ersten blickwinkelabhängigen Sicherheitsmerkmal 103 reflektierten Lichts, auch als "specular reflection" bekannt, die Bildaufnahmebedingungen, beispielsweise eine Beleuchtungsstärke, welche für die Verifikation relevant sind, zu bestimmen und für die Bildverarbeitung zu verwenden.

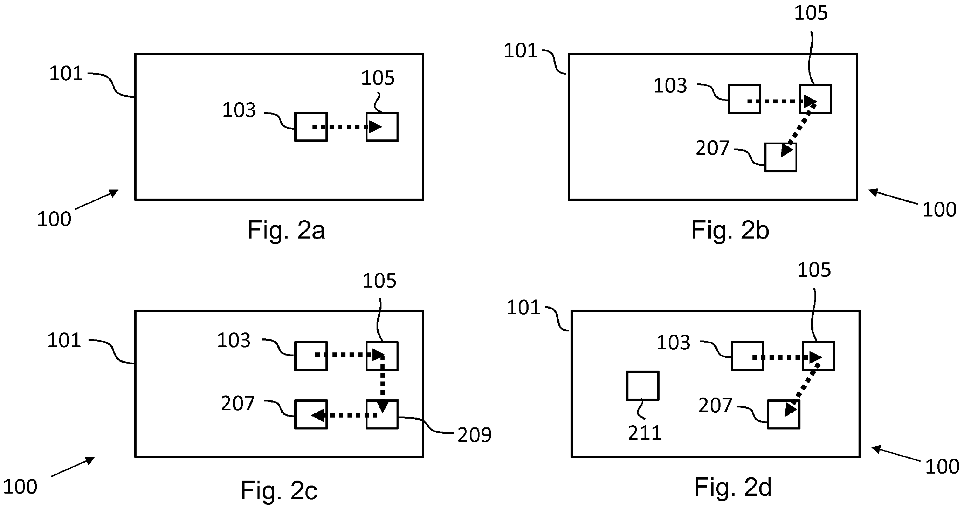

Die Figuren 2a-d zeigen schematische Diagramme in Form von Draufsichten unterschiedlicher Ausführungsformen des Dokuments 100 von Figur 1.

Figur 2a zeigt eine Ausführungsform des Dokuments 100 von Figur 1, bei der das erste blickwinkelabhängige Sicherheitsmerkmal 103 und das zweite blickwinkelabhängige Sicherheitsmerkmal 105 parallel zu einer Längskante des Kartenkörpers 101 des Dokuments 100 ausgerichtet sind. Der Pfeil kennzeichnet eine mögliche Bewegungsrichtung des Telekommunikationsgeräts 120, um die Bildkamera 121 von einer Blickposition in eine weitere Blickposition zu bewegen.

Figur 2b zeigt eine Ausführungsform des Dokuments 100 von Figur 1, das neben dem ersten blickwinkelabhängigen Sicherheitsmerkmal 103 und dem zweiten blickwinkelabhängigen Sicherheitsmerkmal 105 noch ein drittes blickwinkelabhängiges Sicherheitsmerkmal 207 umfasst. Gemäß einer Ausführungsform ist das dritte blickwinkelabhängige Sicherheitsmerkmal 207 ausgebildet, aus der ersten Blickposition in der vorbestimmten Höhe oberhalb des zweiten blickwinkelabhängigen Sicherheitsmerkmals 105 eine dritte blickwinkelabhängige Darstellung bereitzustellen, und aus der zweiten Blickposition in der vorbestimmten Höhe oberhalb des ersten blickwinkelabhängigen Sicherheitsmerkmals 103 eine vierte blickwinkelabhängige Darstellung bereitzustellen. Die Pfeile kennzeichnen mögliche Bewegungsrichtungen des Telekommunikationsgeräts 120, um die Bildkamera 121 von einer Blickposition in weitere Blickpositionen zu bewegen.

Figur 2c zeigt eine Ausführungsform des Dokuments 100 von Figur 1, das neben dem ersten blickwinkelabhängigen Sicherheitsmerkmal 103 und dem zweiten blickwinkelabhängigen Sicherheitsmerkmal 105 noch ein drittes blickwinkelabhängiges Sicherheitsmerkmal 207 und ein viertes blickwinkelabhängiges Sicherheitsmerkmal 209 umfasst. Die Pfeile kennzeichnen mögliche Bewegungsrichtungen des Telekommunikationsgeräts 120, um die Bildkamera 121 von einer Blickposition in weitere Blickpositionen zu bewegen.

Figur 2d zeigt eine Ausführungsform des Dokuments 100 von Figur 1, das neben dem ersten blickwinkelabhängigen Sicherheitsmerkmal 103 und dem zweiten blickwinkelabhängigen Sicherheitsmerkmal 105 noch ein drittes blickwinkelabhängiges Sicherheitsmerkmal 207 und ein Identifikationselement 211 zur eindeutigen Identifizierung des Dokuments 100 umfasst. Bei dem Identifikationselement 211 kann es sich beispielsweise um einen Barcode handeln. Die Pfeile kennzeichnen mögliche Bewegungsrichtungen des Telekommunikationsgeräts 120, um die Bildkamera 121 von einer Blickposition in weitere Blickpositionen zu bewegen.

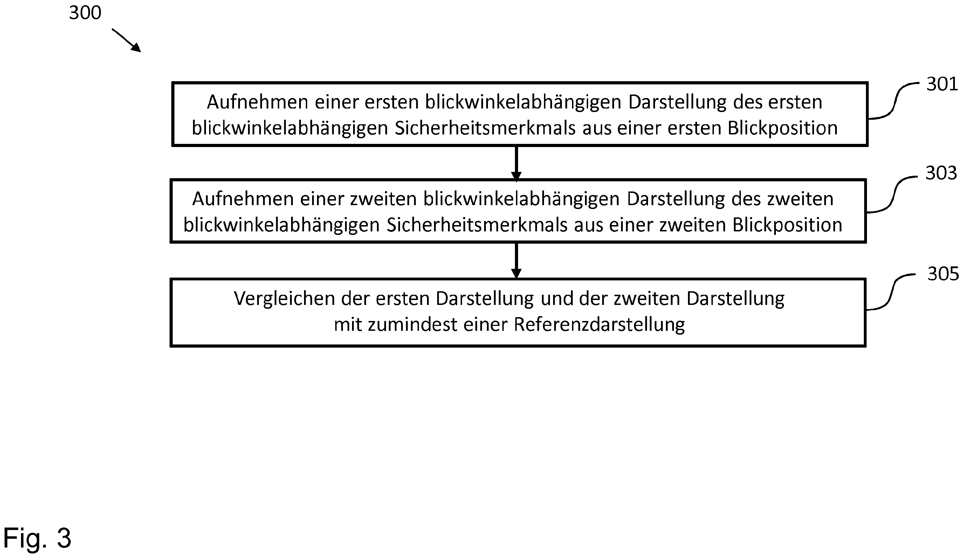

Figur 3 zeigt ein schematisches Diagramm eines Verfahrens 300 zum Verifizieren des Dokuments 100 mittels des Telekommunikationsgeräts 120 gemäß einer Ausführungsform. Das Verfahren 300 umfasst einen ersten Schritt 301 des Aufnehmens einer ersten blickwinkelabhängigen Darstellung des ersten blickwinkelabhängigen Sicherheitsmerkmals 103 aus einer ersten Blickposition in einer vorbestimmten Höhe oberhalb des zweiten blickwinkelabhängigen Sicherheitsmerkmals 105 durch die Bildkamera 121 des Telekommunikationsgeräts 120. Das Verfahren 300 umfasst einen zweiten Schritt 303 des Aufnehmens einer zweiten blickwinkelabhängigen Darstellung des zweiten blickwinkelabhängigen Sicherheitsmerkmals 105 aus einer zweiten Blickposition in der vorbestimmten Höhe oberhalb des ersten blickwinkelabhängigen Sicherheitsmerkmals 103 durch die Bildkamera 121. Das Verfahren 300 umfasst einen dritten Schritt 305 des Vergleichens der aufgenommenen ersten blickwinkelabhängigen Darstellung und der aufgenommenen zweiten blickwinkelabhängigen Darstellung mit zumindest einer Referenzdarstellung, um das Dokument 100 zu verifizieren.

Gemäß einer Ausführungsform werden die erste aufgenommene blickwinkelabhängige Darstellung und die zweite aufgenommene blickwinkelabhängige Darstellung mit derselben Referenzdarstellung oder mit unterschiedlichen Referenzdarstellungen verglichen.

Gemäß einer Ausführungsform wird die Bildkamera 121 des Telekommunikationsgeräts 120 durch eine Bewegung aus der ersten Blickposition in die zweite Blickposition bewegt, indem das Telekommunikationsgerät 120 parallel zum Kartenkörper 101 des Dokuments 100 bewegt wird.

Gemäß einer Ausführungsform kann der Schritt 301 des Aufnehmens der ersten blickwinkelabhängigen Darstellung des ersten blickwinkelabhängigen Sicherheitsmerkmals ferner den Schritt des Aufnehmens einer dritten blickwinkelabhängigen Darstellung eines dritten blickwinkelabhängigen Sicherheitsmerkmals 207, das auf dem Kartenkörper 101 benachbart zu dem ersten blickwinkelabhängigen Sicherheitsmerkmal 103 und dem zweiten blickwinkelabhängigen Sicherheitsmerkmal 105 angeordnet ist, aus der ersten Blickposition in der vorbestimmten Höhe oberhalb des zweiten blickwinkelabhängigen Sicherheitsmerkmals 105 durch die Bildkamera 121 umfassen, und der Schritt 303 des Aufnehmens der zweiten blickwinkelabhängigen Darstellung des zweiten blickwinkelabhängigen Sicherheitsmerkmals 105 ferner den Schritt des Aufnehmens einer vierten blickwinkelabhängigen Darstellung des dritten blickwinkelabhängigen Sicherheitsmerkmals 207 aus der zweiten Blickposition in der vorbestimmten Höhe oberhalb des ersten blickwinkelabhängigen Sicherheitsmerkmals 103 durch die Bildkamera 121 umfassen.

Gemäß einer Ausführungsform kann das Verfahren 300 ferner den Schritt des Anzeigens von Hinweisen zur Positionierung der Bildkamera in der ersten Blickposition oder der zweiten Blickposition auf der Anzeige 125 des Telekommunikationsgerätes 120 umfassen.

Gemäß einer Ausführungsform umfasst der Schritt 301 des Aufnehmens der ersten blickwinkelabhängigen Darstellung des ersten blickwinkelabhängigen Sicherheitsmerkmals 103 aus der ersten Blickposition in der vorbestimmten Höhe oberhalb des zweiten blickwinkelabhängigen Sicherheitsmerkmals 105 durch die Bildkamera 121 ferner den Schritt des Beleuchtens, insbesondere des Blitzbeleuchtens, des ersten blickwinkelabhängigen Sicherheitsmerkmals 103 aus der vorbestimmten Höhe oberhalb des zweiten blickwinkelabhängigen Sicherheitsmerkmals und/oder der Schritt 303 des Aufnehmens der zweiten blickwinkelabhängigen Darstellung des zweiten blickwinkelabhängigen Sicherheitsmerkmals 105 aus der zweiten Blickposition in der vorbestimmten Höhe oberhalb des ersten blickwinkelabhängigen Sicherheitsmerkmals 103 durch die Bildkamera 121 ferner den Schritt des Beleuchtens, insbesondere des Blitzbeleuchtens, des zweiten blickwinkelabhängigen Sicherheitsmerkmals 105 aus der vorbestimmten Höhe oberhalb des ersten blickwinkelabhängigen Sicherheitsmerkmals 103.

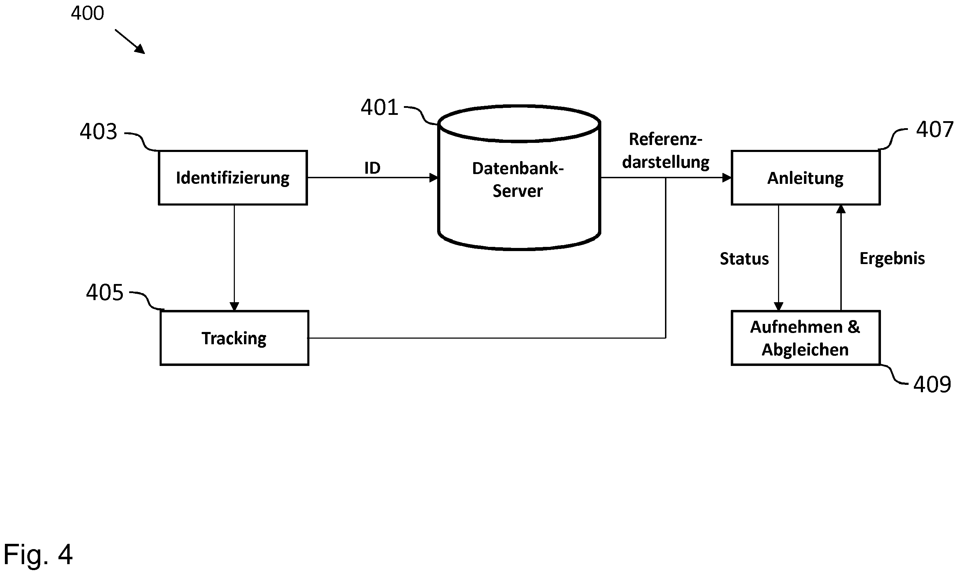

Gemäß einer Ausführungsform kann das Verfahren 300 ferner den Schritt des Auslesens eines Identifikationselements 211 des Dokuments 100 durch das Telekommunikationsgerät 120 und den Schritt des Herunterladens der Referenzdarstellung oder der Referenzdarstellungen von einem entfernten Datenbank-Server 401 auf das Telekommunikationsgerät 120 auf der Grundlage des Identifikationselements 211 umfassen. Ein solcher entfernter Datenbank-Server 401 ist im Zusammenspiel mit den unterschiedlichen vorstehend beschriebenen Komponenten bzw. Funktionseinheiten der Erfindung in dem in Figur 4 gezeigten Ablaufschema 400 dargestellt, nämlich einer Identifizierung 403 des Dokuments 100, einem Tracking 405 der Position des Dokuments 100 relativ zur Bildkamera 121 mittels der Anzeige 125 des Telekommunikationsgeräts 120, einem Abfragen der Referenzdarstellungen vom Datenbank-Server 401 mittels eines aus dem Dokument 100 ausgelesenen Identifikationselements, einer Anleitung 409 zur richtigen Positionierung des Telekommunikationsgeräts 120 relativ zum Dokument 100 auf der Anzeige 125 des Telekommunikationsgeräts 120 und das Aufnehmen und Vergleichen 411 mittels der Bildkamera 121 und des Prozessors 123 des Telekommunikationsgeräts 120.

Wie bereits vorstehend im Zusammenhang mit Figur 2 beschrieben, können die blickwinkelabhängigen Sicherheitsmerkmale auf unterschiedliche Arten auf dem Dokument 100 verteilt sein, wobei die minimale Anzahl blickwinkelabhängiger Sicherheitsmerkmale zwei beträgt. Wie bereits vorstehend beschrieben, gibt es in diesem Fall zwei relevante Blickpositionen des Telekommunikationsgeräts 120 relativ zum Dokument 100, wobei jedes blickwinkelabhängige Sicherheitsmerkmal 103, 105 der Bildkamera 121 des Telekommunikationsgeräts 120 jeweils eine blickwinkelabhängige Darstellung bereitstellt. Bei einer Ausführungsform des Dokuments 100 mit n winkelabhängigen Sicherheitsmerkmalen kann jedes Sicherheitsmerkmal der Bildkamera 121 des Telekommunikationsgeräts 120 (n-1) winkelabhängige Darstellungen bereitstellen, welche insbesondere durch das Beleuchten eines jeweiligen Sicherheitsmerkmales angezeigt werden können. Bei einem begrenzten Leuchtbereich der Lichtquelle des Telekommunikationsgeräts 120 kann es sinnvoll sein, die Anzahl der nutzbaren blickwinkelabhängigen Sicherheitsmerkmale der Anordnung zu beschränken. Versuche haben ergeben, dass die winkelabhängigen Sicherheitsmerkmale vorzugsweise einen Abstand von weniger als 3 cm aufweisen sollten. Ferner wurde festgestellt, dass die laterale Ausdehnung eines jeden winkelabhängigen Sicherheitsmerkmals vorzugsweise ungefähr 1 cm betragen sollte.

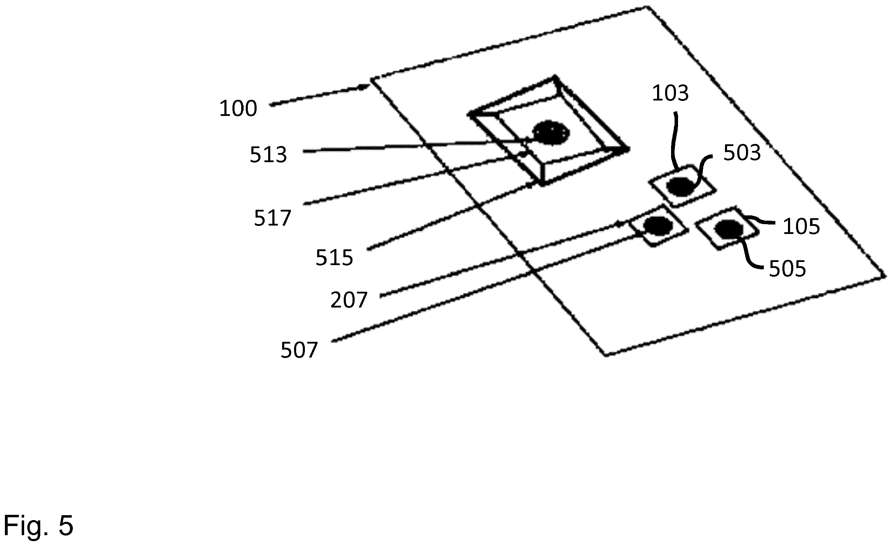

Das vorstehend beschrieben Verfahren 300 erlaubt es in Echtzeit die unterschiedlichen winkelabhängigen Darstellungen auf dem Telekommunikationsgerät 120 bereitzustellen. Dort können die unterschiedlichen winkelabhängigen Darstellungen vom Prozessor 123 verarbeitet und ausgewertet werden. Da ein minimal umgebendes Rechteck ("minimal bounding area") der Bildaufnahme auch Abschnitte aufweisen kann, welche nicht zu einem blickwinkelabhängigen Sicherheitsmerkmal gehören, kann bei der Bildverarbeitung durch den Prozessor 123 eine Maske zum Einsatz kommen, um nur die für den Bildabgleich relevante Abschnitte der Bildaufnahme zu verwenden. Derartige Masken 503, 505 und 507 sind in Figur 5 angedeutet, welche eine beispielhafte Darstellung von Informationen auf der Anzeige 125 des Telekommunikationsgeräts 120 zeigt.

Zur Aufnahme der Darstellungen der winkelabhängigen Sicherheitsmerkmale des Dokuments 100 mittels einer rein translatorischen Bewegung des Dokumentes 100 oder des Telekommunikationsgeräts 120 kann ein ausgerichteter und begrenzter Navigationsraum genutzt werden. Zunächst werden eine Orientierung und ein Abstand des Telekommunikationsgeräts 120 zu dem Dokument 100 eingestellt. Zu diesem Zweck kann ein Orientierungsviereck 515 mit einem Verdrehungs- und Neigungsindikator 517 auf dem in der Anzeige 125 sichtbaren Dokument 100 abgebildet werden, wie dies in Figur 5 dargestellt ist, wobei das Viereck 515 an eine Orientierung und einen Abstand des Telekommunikationsgeräts 120 zu dem Dokument 100 angepasst werden kann.

Um das Dokument 100 während der weiteren Verifizierung zu fokussieren, kann die Bildkamera 121 des Telekommunikationsgeräts 120 eine Autofokusfunktion durchführen. Nach dieser anfänglichen Ausrichtung muss der Benutzer zum Erfassen der blickwinkelabhängigen Sicherheitsmerkmale 103, 105 und 207 lediglich translatorische Bewegungen durchführen. Blinkende Kreise um Blickpositionen der Aufnahme können auffällige Bereiche kennzeichnen, welche mittels einer auf der Anzeige 125 eingeblendeten Löschvorrichtung 513, beispielsweise in Form eines Kreises, entfernt werden können. Dies ermöglicht es dem Benutzer den abgebildeten Bereich des Dokumentes 100 nach eigenem Ermessen zu erfassen und eine größere Zahl an Messungen für den Abgleich zur Verfügung zu stellen.

Für den Bildabgleich kann ein structural similatrity index (SSIM) verwendet werden. Um Rechenzeit zu sparen und Ungenauigkeiten der Positionierung auszugleichen, kann eine Erstausrichtung mittels Fensteranpassung (windowed matching) unter Verwendung der Summe der absoluten Unterschiede hinsichtlich einer Referenzposition erfolgen. Es können jedoch auch andere Methoden für die Ausrichtung verwendet werden.

Die Ermittlung der Abgleich-Ergebnisse kann für jede Blickposition gemäß Schwellwerten durchgeführt werden, wobei für jeden Abschnitt einer Abbildung eine Entscheidung, beispielsweise nicht berechtigt, nicht sicher, oder berechtigt, ermittelt werden kann. Die Abgleich-Ergebnisse können als Werte einer Skala von 0 bis1 erfasst werden. Die aggregierten Werte können die Grundlage eines finalen Schwellwertes bilden, welcher eine finale Entscheidung des Prozessors 123 bestimmt.

Sobald der relevante Bereich des Dokumentes 100 aufgenommen wurde, kann dem Benutzer das Ergebnis der Verifikation durch den Prozessor 123 in Form eines farblichen Vierecks auf der Anzeige 125 des Telekommunikationsgerätes 120 mitgeteilt werden, beispielsweise grün für echt, gelb für nicht sicher und rot für nicht echt. Zum visuellen Vergleich kann jede Referenzdarstellung zusammen mit den aufgenommenen blickwinkelabhängigen Darstellungen auf der Anzeige 125 des Telekommunikationsgeräts 120 angezeigt werden. Somit kann der Benutzer die aufgenommenen Abbildungen als Grundlage einer Entscheidung über die Echtheit des Dokuments 100 verwenden.

### BEZUGSZEICHENLISTE

- 100: Dokument
- 101: Kartenkörper
- 103: Erstes blickwinkelabhängiges Sicherheitsmerkmal
- 105: Zweites blickwinkelabhängiges Sicherheitsmerkmal

- 120: Telekommunikationsgerät
- 121: Bildkamera
- 123: Prozessor
- 125: Anzeige

- 207: Drittes blickwinkelabhängiges Sicherheitsmerkmal
- 209: Viertes blickwinkelabhängiges Sicherheitsmerkmal
- 211: Identifikationselement

- 300: Verfahren zum Verifizieren eines Dokuments
- 301: Aufnehmen einer ersten Darstellung
- 303: Aufnehmen einer zweiten Darstellung
- 305: Vergleichen der ersten und zweiten Darstellung mit einer Referenzdarstellung

- 400: Ablaufschema
- 401: Datenbank-Server
- 403: Identifizierung
- 405: Tracking
- 407: Anleitung
- 409: Aufnehmen & Vergleichen

- 503: Maske
- 505: Maske
- 507: Maske
- 513: Löschvorrichtung
- 515: Orientierungsviereck
- 517: Verdrehungs- und Neigungs-Indikator

## Patentansprüche

1. Dokument (100), mit:
einem Kartenkörper (101);
einem auf dem Kartenkörper (101) angeordneten ersten blickwinkelabhängigen Sicherheitsmerkmal (103);
einem auf dem Kartenkörper (101) benachbart zu dem ersten blickwinkelabhängigen Sicherheitsmerkmal (103) angeordneten zweiten blickwinkelabhängigen Sicherheitsmerkmal (105);
wobei das erste blickwinkelabhängige Sicherheitsmerkmal (103) ausgebildet ist, aus einer ersten Blickposition in einer vorbestimmten Höhe senkrecht oberhalb des zweiten blickwinkelabhängigen Sicherheitsmerkmals (105) eine erste blickwinkelabhängige Darstellung bereitzustellen, und wobei das zweite blickwinkelabhängige Sicherheitsmerkmal (105) ausgebildet ist, aus einer zweiten Blickposition in der vorbestimmten Höhe senkrecht oberhalb des ersten blickwinkelabhängigen Sicherheitsmerkmals (103) eine zweite blickwinkelabhängige Darstellung bereitzustellen.

2. Dokument (100) nach Anspruch 1, wobei die erste blickwinkelabhängige Darstellung und die zweite blickwinkelabhängige Darstellung gleich sind.

3. Dokument (100) nach Anspruch 1 oder 2, wobei das erste blickwinkelabhängige Sicherheitsmerkmal (103) und das zweite blickwinkelabhängige Sicherheitsmerkmal (105) ausgebildet sind, die blickwinkelabhängigen Darstellungen aus demselben Blickwinkel bereitzustellen.

4. Dokument (100) nach einem der vorstehenden Ansprüche, wobei das erste blickwinkelabhängige Sicherheitsmerkmal (103) ausgebildet ist, die erste blickwinkelabhängige Darstellung bei einer Beleuchtung, insbesondere bei einer Blitzbeleuchtung, des ersten blickwinkelabhängigen Sicherheitsmerkmals (103) aus der vorbestimmten Höhe oberhalb des zweiten blickwinkelabhängigen Sicherheitsmerkmals (105) bereitzustellen, und wobei das zweite blickwinkelabhängige Sicherheitsmerkmal (105) ausgebildet ist, die zweite blickwinkelabhängige Darstellung bei einer Beleuchtung, insbesondere bei einer Blitzbeleuchtung, des zweiten blickwinkelabhängigen Sicherheitsmerkmals (105) aus der vorbestimmten Höhe oberhalb des ersten blickwinkelabhängigen Sicherheitsmerkmals (103) bereitzustellen.

5. Dokument (100) nach einem der vorstehenden Ansprüche, mit einem dritten blickwinkelabhängigen Sicherheitsmerkmal (207), das auf dem Kartenkörper (101) benachbart zu dem ersten blickwinkelabhängigen Sicherheitsmerkmal (103) und dem zweiten blickwinkelabhängigen Sicherheitsmerkmal (105) angeordnet ist, wobei das dritte blickwinkelabhängige Sicherheitsmerkmal (207) ausgebildet ist, aus der ersten Blickposition in der vorbestimmten Höhe oberhalb des zweiten blickwinkelabhängigen Sicherheitsmerkmals (105) eine dritte blickwinkelabhängige Darstellung bereitzustellen, und aus der zweiten Blickposition in der vorbestimmten Höhe oberhalb des ersten blickwinkelabhängigen Sicherheitsmerkmals (103) eine vierte blickwinkelabhängige Darstellung bereitzustellen.

6. Dokument (100) nach einem der vorstehenden Ansprüche, mit einem auslesbaren Identifikationselement zur eindeutigen Identifizierung des Dokuments (100).

7. Dokument (100) nach einem der vorstehenden Ansprüche, wobei das erste blickwinkelabhängige Sicherheitsmerkmal (103) oder das zweite blickwinkelabhängige Sicherheitsmerkmal (105) ein Hologramm oder eine Drucktinte mit blickwinkelabhängigen Reflexionseigenschaften oder Absorptionseigenschaften umfasst.

8. Verfahren (300) zum Verifizieren eines Dokumentes (100), das einen Kartenkörper (101), ein auf dem Kartenkörper (101) angeordnetes erstes blickwinkelabhängiges Sicherheitsmerkmal (103) und ein auf dem Kartenkörper (101) benachbart zu dem ersten blickwinkelabhängigen Sicherheitsmerkmal (103) angeordnetes zweites blickwinkelabhängiges Sicherheitsmerkmal (105) aufweist, mittels eines Telekommunikationsgerätes (120), insbesondere eines Smartphones, das eine Bildkamera (121) aufweist, mit:
Aufnehmen (301) einer ersten blickwinkelabhängigen Darstellung des ersten blickwinkelabhängigen Sicherheitsmerkmals (103) aus einer ersten Blickposition in einer vorbestimmten Höhe senkrecht oberhalb des zweiten blickwinkelabhängigen Sicherheitsmerkmals (105) durch die Bildkamera (121);
Aufnehmen (303) einer zweiten blickwinkelabhängigen Darstellung des zweiten blickwinkelabhängigen Sicherheitsmerkmals (105) aus einer zweiten Blickposition in der vorbestimmten Höhe senkrecht oberhalb des ersten blickwinkelabhängigen Sicherheitsmerkmals (103) durch die Bildkamera (121); und
Vergleichen (305) der aufgenommenen ersten blickwinkelabhängigen Darstellung und der aufgenommenen zweiten blickwinkelabhängigen Darstellung mit zumindest einer Referenzdarstellung, um das Dokument (100) zu verifizieren.

9. Verfahren (300) nach Anspruch 8, wobei die erste aufgenommene blickwinkelabhängige Darstellung und die zweite aufgenommene blickwinkelabhängige Darstellung mit derselben Referenzdarstellung oder mit unterschiedlichen Referenzdarstellungen verglichen werden.

10. Verfahren (300) nach Anspruch 8 oder 9, wobei die Bildkamera (121) des Telekommunikationsgeräts (120) durch eine Bewegung aus der ersten Blickposition in die zweite Blickposition bewegt wird, indem das Telekommunikationsgerät (120) parallel zum Kartenkörper (101) des Dokuments (100) bewegt wird.

11. Verfahren (300) nach einem der Ansprüche 8 bis 10, wobei der Schritt (301) des Aufnehmens der ersten blickwinkelabhängigen Darstellung des ersten blickwinkelabhängigen Sicherheitsmerkmals (103) ferner den Schritt des Aufnehmens einer dritten blickwinkelabhängigen Darstellung eines dritten blickwinkelabhängigen Sicherheitsmerkmals (207), das auf dem Kartenkörper (101) benachbart zu dem ersten blickwinkelabhängigen Sicherheitsmerkmal (103) und dem zweiten blickwinkelabhängigen Sicherheitsmerkmal (105) angeordnet ist, aus der ersten Blickposition in der vorbestimmten Höhe oberhalb des zweiten blickwinkelabhängigen Sicherheitsmerkmals (105) durch die Bildkamera (121) umfasst, und wobei der Schritt (303) des Aufnehmens der zweiten blickwinkelabhängigen Darstellung des zweiten blickwinkelabhängigen Sicherheitsmerkmals (105) ferner den Schritt des Aufnehmens einer vierten blickwinkelabhängigen Darstellung des dritten blickwinkelabhängigen Sicherheitsmerkmals (207) aus der zweiten Blickposition in der vorbestimmten Höhe oberhalb des ersten blickwinkelabhängigen Sicherheitsmerkmals (103) durch die Bildkamera (121) umfasst.

12. Verfahren (300) nach einem der Ansprüche 8 bis 11, wobei das Verfahren (300) ferner den Schritt des Anzeigens von Hinweisen zur Positionierung der Bildkamera in der ersten Blickposition oder der zweiten Blickposition auf einer Anzeige (125) des Telekommunikationsgerätes (120) umfasst.

13. Verfahren (300) nach einem der Ansprüche 8 bis 12, wobei der Schritt (301) des Aufnehmens der ersten blickwinkelabhängigen Darstellung des ersten blickwinkelabhängigen Sicherheitsmerkmals (103) aus der ersten Blickposition in der vorbestimmten Höhe oberhalb des zweiten blickwinkelabhängigen Sicherheitsmerkmals (105) durch die Bildkamera (121) ferner den Schritt des Beleuchtens, insbesondere des Blitzbeleuchtens, des ersten blickwinkelabhängigen Sicherheitsmerkmals (103) aus der vorbestimmten Höhe oberhalb des zweiten blickwinkelabhängigen Sicherheitsmerkmals (105) umfasst oder der Schritt (303) des Aufnehmens der zweiten blickwinkelabhängigen Darstellung des zweiten blickwinkelabhängigen Sicherheitsmerkmals (105) aus der zweiten Blickposition in der vorbestimmten Höhe oberhalb des ersten blickwinkelabhängigen Sicherheitsmerkmals (103) durch die Bildkamera (121) ferner den Schritt des Beleuchtens, insbesondere des Blitzbeleuchtens, des zweiten blickwinkelabhängigen Sicherheitsmerkmals (105) aus der vorbestimmten Höhe oberhalb des ersten blickwinkelabhängigen Sicherheitsmerkmals (103) umfasst.

14. Verfahren (300) nach einem der Ansprüche 8 bis 13, wobei das Verfahren (300) ferner den Schritt des Auslesen eines Identifikationselements (211) des Dokuments (100) durch das Telekommunikationsgerät (120) und den Schritt des Herunterladens der Referenzdarstellung oder der Referenzdarstellungen von einem entfernten Server (401) auf das Telekommunikationsgerät (120) auf der Grundlage des Identifikationselements (211) umfasst.

15. Telekommunikationsgerät (120) zum Verifizieren eines Dokuments (100), das einen Kartenkörper (101), ein auf dem Kartenkörper (101) angeordnetes erstes blickwinkelabhängiges Sicherheitsmerkmal (103) und ein auf dem Kartenkörper (101) benachbart zu dem ersten blickwinkelabhängigen Sicherheitsmerkmal (103) angeordnetes zweites blickwinkelabhängiges Sicherheitsmerkmal (105) aufweist, wobei das Telekommunikationsgerät (120) umfasst:
eine Bildkamera (121), die ausgebildet ist, eine erste blickwinkelabhängige Darstellung des ersten blickwinkelabhängigen Sicherheitsmerkmals (103) aus einer ersten Blickposition in einer vorbestimmten Höhe oberhalb des zweiten blickwinkelabhängigen Sicherheitsmerkmals (105) aufzunehmen und eine zweite blickwinkelabhängige Darstellung des zweiten blickwinkelabhängigen Sicherheitsmerkmals (105) aus einer zweiten Blickposition in der vorbestimmten Höhe oberhalb des ersten blickwinkelabhängigen Sicherheitsmerkmals (103) aufzunehmen; und
einen Prozessor (123), der ausgebildet ist, die aufgenommene erste blickwinkelabhängige Darstellung und die aufgenommene zweite blickwinkelabhängige Darstellung mit zumindest einer Referenzdarstellung zu vergleichen, um das Dokument (100) zu verifizieren.

## Claims

1. A document (100), having:
a card body (101);
a first viewing angle-dependent security feature (103) arranged on the card body (101);
a second viewing angle-dependent security feature (105) arranged on the card body (101), adjacent to the first viewing angle-dependent security feature (103);
wherein the first viewing angle-dependent security feature (103) is configured to provide a first viewing angle-dependent representation from a first viewing position at a predetermined height vertically above the second viewing angle-dependent security feature (105) and wherein the second viewing angle-dependent security feature (105) is configured to provide a second viewing angle-dependent representation from a second viewing position at the predetermined height vertically above the first viewing angle-dependent security feature (103).

2. The document (100) according to claim 1, wherein the first viewing angle-dependent representation and the second viewing angle-dependent representation are the same.

3. The document (100) according to claim 1 or 2, wherein the first viewing angle-dependent security feature (103) and the second viewing angle-dependent security feature (105) are configured to provide the viewing angle-dependent representations from the same viewing angle.

4. The document (100) according to one of the preceding claims, wherein the first viewing angle-dependent security feature (103) is configured to provide the first viewing angle-dependent representation with illumination, in particular flash illumination, of the first viewing angle-dependent security feature (103) from the predetermined height above the second viewing angle-dependent security feature (105), and wherein the second viewing angle-dependent security feature (105) is configured to provide the second viewing angle-dependent representation with illumination, in particular flash illumination, of the second viewing angle-dependent security feature (105) from the predetermined height above the first viewing angle-dependent security feature (103).

5. The document (100) according to one of the preceding claims, having a third viewing angle-dependent security feature (207) that is arranged on the card body (101), adjacent to the first viewing angle-dependent security feature (103) and the second viewing angle-dependent security feature (105), wherein the third viewing angle-dependent security feature (207) is configured to provide a third viewing angle-dependent representation from the first viewing position at the predetermined height above the second viewing angle-dependent security feature (105) and to provide a fourth viewing angle-dependent representation from the second viewing position at the predetermined height above the first viewing angle-dependent security feature (103).

6. The document (100) according to one of the preceding claims, having a readable identification element for unambiguous identification of the document (100).

7. The document (100) according to one of the preceding claims, wherein the first viewing angle-dependent security feature (103) or the second viewing angle-dependent security feature (105) includes a hologram or a printing ink with viewing angle-dependent reflection properties or absorption properties.

8. A method (300) for verifying a document (100) having a card body (101), a first viewing angle-dependent security feature (103) arranged on the card body (101) and a second viewing angle-dependent security feature (105) arranged on the card body (101), adjacent to the first viewing angle-dependent security feature (103), by means of a telecommunication device (120), in particular a smart phone, that has an imaging camera (121), including:
recording (301) a first viewing angle-dependent representation of the first viewing angle-dependent security feature (103) by the imaging camera (121) from a first viewing position at a predetermined height vertically above the second viewing angle-dependent security feature (105);
recording (303) a second viewing angle-dependent representation of the second viewing angle-dependent security feature (105) by the imaging camera (121) from a second viewing position at the predetermined height vertically above the first viewing angle-dependent security feature (103); and
comparing (305) the recorded first viewing angle-dependent representation and the recorded second viewing angle-dependent representation to at least one reference representation in order to verify the document (100).

9. The method (300) according to claim 8, wherein the first recorded viewing angle-dependent representation and the second recorded viewing angle-dependent representation are compared to the same reference representation or to different reference representations.

10. The method (300) according to claim 8 or 9, wherein the imaging camera (121) of the telecommunication device (120) is moved by a movement from the first viewing position into the second viewing position, by moving the telecommunication device (120) parallel to the card body (101) of the document (100).

11. The method (300) according to one of claims 8 to 10, wherein the step (301) of recording the first viewing angle-dependent representation of the first viewing angle-dependent security feature (103) also includes the step of recording a third viewing angle-dependent representation of a third viewing angle-dependent security feature (207) that is arranged on the card body (101), adjacent to the first viewing angle-dependent security feature (103) and to the second viewing angle-dependent security feature (105), by the imaging camera (121) from the first viewing position at the predetermined height above the second viewing angle-dependent security feature (105), and wherein the step (303) of recording the second viewing angle-dependent representation of the second viewing angle-dependent security feature (105) also includes the step of recording a fourth viewing angle-dependent representation of the third viewing angle-dependent security feature (207) by the imaging camera (121) from the second viewing position at the predetermined height above the first viewing angle-dependent security feature (103).

12. The method (300) according to one of claims 8 to 11, wherein the method (300) further includes the step of displaying instructions for positioning the imaging camera in the first viewing position or the second viewing position on a display (125) of the telecommunication device (120).

13. The method (300) according to one of claims 8 to 12, wherein the step (301) of recording the first viewing angle-dependent representation of the first viewing angle-dependent security feature (103) by the imaging camera (121) from the first viewing position at the predetermined height above the second viewing angle-dependent security feature (105) also includes the step of illuminating, in particular flash-illuminating, the first viewing angle-dependent security feature (103) from the predetermined height above the second viewing angle-dependent security feature (105) or the step (303) of recording the second viewing angle-dependent representation of the second viewing angle-dependent security feature (105) by the imaging camera (121) from the second viewing position at the predetermined height above the first viewing angle-dependent security feature (103), and also the step of illuminating, in particular flash-illuminating, the second viewing angle-dependent security feature (105) from the predetermined height above the first viewing angle-dependent security feature (103).

14. The method (300) according to one of claims 8 to 13, wherein the method (300) also includes the step of reading out an identification element (211) of the document (100) by the telecommunication device (120), and the step of downloading the reference representation or the reference representations from a remote server (401) onto the telecommunication device (120), based on the identification element (211).

15. A telecommunication device (120) for verifying a document (100) having a card body (101), a first viewing angle-dependent security feature (103) arranged on the card body (101), and a second viewing angle-dependent security feature (105) arranged on the card body (101), adjacent to the first viewing angle-dependent security feature (103), wherein the telecommunication device (120) includes:
an imaging camera (121) that is configured to record a first viewing angle-dependent representation of the first viewing angle-dependent security feature (103) from a first viewing
position at a predetermined height above the second viewing angle-dependent security feature (105) and to record a second viewing angle-dependent representation of the second viewing angle-dependent security feature (105) from a second viewing position at the predetermined height above the first viewing angle-dependent security feature (103); and
a processor (123) that is configured to compare the recorded first viewing angle-dependent representation and the recorded second viewing angle-dependent representation to at least one reference representation in order to verify the document (100).

## Revendications

1. Document (100) comprenant :
un corps de carte (101) ;
une première caractéristique de sécurité (103) dépendant de l'angle de visualisation et disposée sur le corps de carte (101) ;
une deuxième caractéristique de sécurité (105) dépendant de l'angle de visualisation, disposée sur le corps de carte (101) et adjacente à la première caractéristique de sécurité (103) dépendant de l'angle de visualisation ;
la première caractéristique de sécurité (103) dépendant de l'angle de visualisation étant conçue pour fournir une première représentation dépendant de l'angle de visualisation depuis une première position de visualisation à une hauteur prédéterminée perpendiculairement au-dessus de la deuxième caractéristique de sécurité (105) dépendant de l'angle de visualisation, et la deuxième caractéristique de sécurité (105) dépendant de l'angle de visualisation étant conçue pour fournir une deuxième représentation dépendant de l'angle de visualisation depuis une deuxième position de visualisation à la hauteur prédéterminée perpendiculairement au-dessus de la première caractéristique de sécurité (103) dépendant de l'angle de visualisation.

2. Document (100) selon la revendication 1, la première représentation dépendant de l'angle de visualisation et la deuxième représentation dépendant de l'angle de visualisation sont identiques.

3. Document (100) selon la revendication 1 ou 2, la première caractéristique de sécurité (103) dépendant de l'angle de visualisation et la deuxième caractéristique de sécurité (105) dépendant de l'angle de visualisation étant conçues pour fournir les représentations dépendant de l'angle de visualisation avec le même angle de visualisation.

4. Document (100) selon l'une des revendications précédentes, la première caractéristique de sécurité (103) dépendant de l'angle de visualisation étant conçue pour fournir la première représentation dépendant de l'angle de visualisation avec un éclairage, en particulier avec un éclairage au flash, de la première caractéristique de sécurité (103) dépendant de l'angle de visualisation depuis la hauteur prédéterminée au-dessus de la deuxième caractéristique de sécurité (105) dépendant de l'angle de visualisation, et la deuxième caractéristique de sécurité (105) dépendant de l'angle de visualisation étant conçue pour fournir la deuxième représentation dépendant de l'angle de visualisation avec un éclairage, en particulier un éclairage au flash, de la deuxième caractéristique de sécurité (105) dépendant de l'angle de visualisation depuis la hauteur prédéterminée au-dessus de la première caractéristique de sécurité (103) dépendant de l'angle de visualisation.

5. Document (100) selon l'une des revendications précédentes, comprenant une troisième caractéristique de sécurité (207) dépendant de l'angle de visualisation qui est disposée sur le corps de carte (101) de manière adjacente à la première caractéristique de sécurité (103 dépendant de l'angle de visualisation et à la deuxième caractéristique de sécurité (105) dépendant de l'angle de visualisation, la troisième caractéristique de sécurité (207) dépendant de l'angle de visualisation étant conçue pour fournir une troisième représentation dépendant de l'angle de visualisation depuis la première position de visualisation à la hauteur prédéterminée au-dessus de la deuxième caractéristique de sécurité (105) dépendant de l'angle de visualisation et pour fournir une quatrième représentation dépendant de l'angle de visualisation depuis la deuxième position de visualisation à la hauteur prédéterminée au-dessus de la première caractéristique de sécurité (103) dépendant de l'angle de visualisation.

6. Document (100) selon l'une des revendications précédentes, comprenant un élément d'identification lisible pour identifier sans équivoque le document (100).

7. Document (100) selon l'une des revendications précédentes, la première caractéristique de sécurité (103) dépendant de l'angle de visualisation ou la deuxième caractéristique de sécurité (105) dépendant de l'angle de visualisation comprenant un hologramme ou une encre d'impression présentant des propriétés de réflexion ou des propriétés d'absorption dépendant de l'angle de visualisation.

8. Procédé (300) de vérification d'un document (100) comportant un corps de carte (101), une première caractéristique de sécurité (103) dépendant de l'angle de visualisation disposée sur le corps de carte (101) et une deuxième caractéristique de sécurité (105) dépendant de l'angle de visualisation disposée sur le corps de carte (101) de manière adjacente à la première caractéristique de sécurité (103) dépendant de l'angle de visualisation, au moyen d'un dispositif de télécommunication (120), en particulier d'un téléphone intelligent, qui comporte une caméra d'imagerie (121), le procédé comprenant les étapes consistant à :
enregistrer (301) une première représentation, dépendant de l'angle de visualisation, de la première caractéristique de sécurité (103) dépendant de l'angle de visualisation par la caméra d'imagerie (121) depuis une première position de visualisation à une hauteur prédéterminée perpendiculairement au-dessus de la deuxième caractéristique de sécurité (105) dépendant de l'angle de visualisation ;
enregistrer (303) une deuxième représentation, dépendant de l'angle de visualisation, de la deuxième caractéristique de sécurité (105), dépendant de l'angle de visualisation, par la caméra d'imagerie (121) depuis une deuxième position de visualisation à la hauteur prédéterminée perpendiculairement au-dessus de la première caractéristique de sécurité (103) dépendant de l'angle de visualisation ; et
comparer (305) la première représentation enregistrée, dépendant de l'angle de visualisation, et la deuxième représentation enregistrée, dépendant de l'angle de visualisation, à au moins une représentation de référence afin de vérifier le document (100).

9. Procédé (300) selon la revendication 8, dans lequel la première représentation enregistrée, dépendant de l'angle de visualisation, et la deuxième représentation enregistrée, dépendant de l'angle de visualisation, sont comparées à la même représentation de référence ou à différentes représentations de référence.

10. Procédé (300) selon la revendication 8 ou 9, la caméra d'imagerie (121) du dispositif de télécommunication (120) étant déplacée par un mouvement allant de la première position de visualisation à la deuxième position de visualisation, en ce que le dispositif de télécommunication (120) est déplacé parallèlement au corps de carte (101) du document (100).

11. Procédé (300) selon l'une des revendications 8 à 10, l'étape (301) d'enregistrement de la première représentation, dépendant de l'angle de visualisation, de la première caractéristique de sécurité (103) dépendant de l'angle de visualisation comprenant en outre l'étape d'enregistrement d'une troisième représentation, dépendant de l'angle de visualisation, d'une troisième caractéristique de sécurité (207) dépendant de l'angle de visualisation, disposée sur le corps de carte (101) de manière adjacente à la première caractéristique de sécurité (103) dépendant de l'angle de visualisation et à la deuxième caractéristique de sécurité (105) dépendant de l'angle de visualisation, par la caméra d'imagerie (121) depuis la première position de visualisation à la hauteur prédéterminée au-dessus de la deuxième caractéristique de sécurité (105) dépendant de l'angle de visualisation, et l'étape (303) d'enregistrement de la deuxième représentation, dépendant de l'angle de visualisation, de la deuxième caractéristique de sécurité (105) dépendant de l'angle de visualisation comprenant en outre l'étape d'enregistrement d'une quatrième représentation, dépendant de l'angle de visualisation, de la troisième caractéristique de sécurité (207) dépendant de l'angle de visualisation par la caméra d'imagerie (121) depuis la deuxième position de visualisation à la hauteur prédéterminée au-dessus de la première caractéristique de sécurité (103) dépendant de l'angle de visualisation.

12. Procédé (300) selon l'une des revendications 8 à 11, dans lequel le procédé (300) comprend en outre l'étape consistant à afficher des indications concernant le positionnement de la caméra d'imagerie dans la première position de visualisation ou la deuxième position de visualisation sur un affichage (125) du dispositif de télécommunication (120).

13. Procédé (300) selon l'une des revendications 8 à 12, dans lequel l'étape (301) consistant à enregistrer la première représentation, dépendant de l'angle de visualisation, de la première caractéristique de sécurité (103) dépendant de l'angle de visualisation par la caméra (121) depuis la première position de visualisation à la hauteur prédéterminée au-dessus de la deuxième caractéristique de sécurité (105) dépendant de l'angle de visualisation comprend en outre l'étape consistant à éclairer, en particulier à éclairer au flash, la première caractéristique de sécurité (103) dépendant de l'angle de visualisation depuis la hauteur prédéterminée au-dessus de la deuxième caractéristique de sécurité (105) dépendant de l'angle de visualisation ou l'étape (303) consistant à enregistrer la deuxième représentation, dépendant de l'angle de visualisation, de la deuxième caractéristique de sécurité (105) dépendant de l'angle de visualisation par la caméra d'imagerie (121) depuis la deuxième position de visualisation à la hauteur prédéterminée au-dessus de la première caractéristique de sécurité (103) dépendant de l'angle de visualisation, ainsi que l'étape consistant à éclairer, en particulier à éclairer au flash, la deuxième caractéristique de sécurité (105) dépendant de l'angle de visualisation depuis la hauteur prédéterminée au-dessus de la première caractéristique de sécurité (103) dépendant de l'angle de visualisation.

14. Procédé (300) selon l'une des revendications 8 à 13, dans lequel le procédé (300) comprend en outre l'étape consistant à lire un élément d'identification (211) du document (100) à l'aide du dispositif de télécommunication (120), et l'étape consistant à télécharger la représentation de référence ou les représentations de référence depuis un serveur distant (401) sur le dispositif de télécommunication (120) sur la base de l'élément d'identification (211).

15. Dispositif de télécommunication (120) destiné à vérifier un document (100) comportant un corps de carte (101), une première caractéristique de sécurité (103) dépendant de l'angle de visualisation située sur le corps de carte (101) et une deuxième caractéristique (105) dépendant de l'angle de visualisation située sur le corps de carte (101) de manière adjacente à la première caractéristique de sécurité (103) dépendant de l'angle de visualisation, le dispositif de télécommunication (120) comprenant :
une caméra d'imagerie (121) conçue pour enregistrer une première représentation, dépendant de l'angle de visualisation, de la première caractéristique de sécurité (103) dépendant de l'angle de visualisation depuis une première position de visualisation à une hauteur prédéterminée au-dessus de la deuxième caractéristique de sécurité (105) dépendant de l'angle de visualisation et pour enregistrer une deuxième représentation, dépendant de l'angle de visualisation, de la deuxième caractéristique de sécurité (105) dépendant de l'angle de visualisation depuis une deuxième position de visualisation à la hauteur prédéterminée au-dessus de la première caractéristique de sécurité (103) dépendant de l'angle de visualisation ; et
un processeur (123) conçu pour comparer la première représentation enregistrée, dépendant de l'angle de visualisation, et la deuxième représentation enregistrée, dépendant de l'angle de visualisation, à au moins une représentation de référence afin de vérifier le document (100) .
